# EUROPEAN PATENT APPLICATION

(11) **EP 4 296 918 A1**
(43) Date of publication of application: **27.12.2023**
(21) Application number: 23180525.0
(22) Date of filing: 21.06.2023
(51) Int. Cl.: G06Q 10/063, G06Q 50/06

(54) **METHOD AND SYSTEM FOR MONITORING AND CONTROLLING ENERGY USAGE, CARBON EMISSION AND UTILITY COSTS AT ONE OR MORE FACILITIES**

(30) Priority: 22.06.2022 IN 202211035789
(71) Applicant: Honeywell International Inc., Charlotte, NC 28202 (US)
(72) Inventor: KUMAR, Aditya, Charlotte, 28202 (US); A, Eashwar Unnikrishnan, Charlotte, 28202 (US); KAMATH, Madhav V., Charlotte, 28202 (US); SIVAPRASAD, Naveen Kumar Dindukurthi, Charlotte, 28202 (US); RANJAN, Prabhat, Charlotte, 28202 (US)
(74) Representative: Houghton, Mark Phillip

(57) **Abstract**

A system for monitoring and controlling carbon emission, energy usage and/or utility costs at one or more facilities includes an input for receiving information regarding use of a commodity or service provided by each of one or more utilities at one or more facilities, a memory for storing the received information including historical information, and a controller that is configured to receive an input from a user to control one or more of the devices to reduce carbon emission, energy usage and/or utility costs at one or more of the facilities, and to send control commands to control the one or more devices based on the received user input. The controller is configured to render a dashboard for display on a display, where the dashboard may concurrently display a carbon emission card, an energy usage card and a utility cost card.

## Description

### Technical Field

The present disclosure relates to systems and methods for monitoring and controlling energy usage, carbon emission and/or utility costs at one or more facilities.

### Background

Energy usage can contribute significantly to the cost of operating a facility, both in financial costs as well as in carbon emissions. Monitoring energy usage, carbon emissions and utility costs for one or more facilities can improve control of the one or more facilities because an operator is able to easily see the impact of their control operations. What would be desirable would be systems and methods that allow for improved monitoring and controlling of energy usage, carbon emissions and/or utility costs across one or more facilities.

### Summary

This disclosure relates to systems and methods for monitoring and controlling energy usage, carbon emission and/or utility costs at one or more facilities. An example may be found in a system for monitoring and controlling carbon emission, energy usage and utility costs at one or more facilities, wherein each facility includes one or more devices that use a commodity or service provided by a utility. The illustrative system includes an input for receiving information regarding use of a commodity or service provided by each of one or more utilities at one or more facilities, a memory for storing the received information including historical information, and a controller operatively coupled to the input and the memory. The controller is configured to receive an input from a user to control one or more of the devices to reduce carbon emission, energy usage and/or utility costs at one or more of the facilities, and to send control commands to control the one or more devices based on the received user input.

The controller is configured to render a dashboard for display on a display. The dashboard concurrently displays a carbon emission card, an energy usage card and a utility cost card. The carbon emission card displays a carbon emission rolled up over a current time period relative to the carbon emission rolled up over a previous time period, wherein the carbon emission rolled up over the current time period and the carbon emission rolled up over the previous time period are determined based at least in part on the information stored in the memory. The energy usage card displays an energy usage rolled up over the current time period relative to the energy usage rolled up over the previous time period, wherein the energy usage rolled up over the current time period and the energy usage rolled up over the previous time period are determined based at least in part on the information stored in the memory. The utility cost card displays a utility cost rolled up over the current time period relative to the utility cost rolled up over a previous time period, wherein the utility cost rolled up over the current time period and the utility costs rolled up over the previous time period are determined based at least in part on the information stored in the memory.

Another example may be found in a method for monitoring and controlling utility usage at one or more facilities, wherein each facility includes one or more devices that use a commodity or service provided by a utility. The method includes receiving utility usage information regarding utility usage at one or more facilities and receiving environmental information regarding one or more environmental conditions in or around each of the one or more of the facilities. A non-linear model is applied to the received utility usage information and the received environmental information to determining a baseline utility usage for a current time period. A measure of current utility usage based on the received utility usage information is rolled up over the current time period. A determination is made as to when the measure of current utility usage exceeds the baseline utility usage by at least a threshold amount. An alert is issued when the measure of current utility usage exceeds the baseline utility usage by at least the threshold amount.

Another example may be found in a method for determining utility usage at one or more facilities. The method includes receiving a plurality of utility usage amounts for each of one or more of a plurality of facilities, and aggregating the plurality of utility usage amounts for each of the one or more of the plurality of facilities. A virtual meter is created for each of the one or more of the plurality of facilities, wherein each of the virtual meters is configured to report the aggregated utility usage amount as the utility usage for each of the one or more of the plurality of facilities. The utility usage is reported for each of the one or more of the plurality of facilities.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic block diagram of an illustrative system for monitoring and controlling carbon emissions, energy usage and utility costs at one or more facilities;
Figure 2 is a flow diagram showing an illustrative method for monitoring and controlling carbon emissions, energy usage and utility costs at one or more facilities;
Figure 3 is a flow diagram showing an illustrative method for determining utility usage at one or more facilities;
Figure 4 is a flow diagram showing an illustrative method for determining utility usage at one or more facilities; and
Figures 5 through 21 are screen captures showing illustrative screens that may be displayed as part of the dashboard generated and displayed by the illustrative system of Figure 1.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

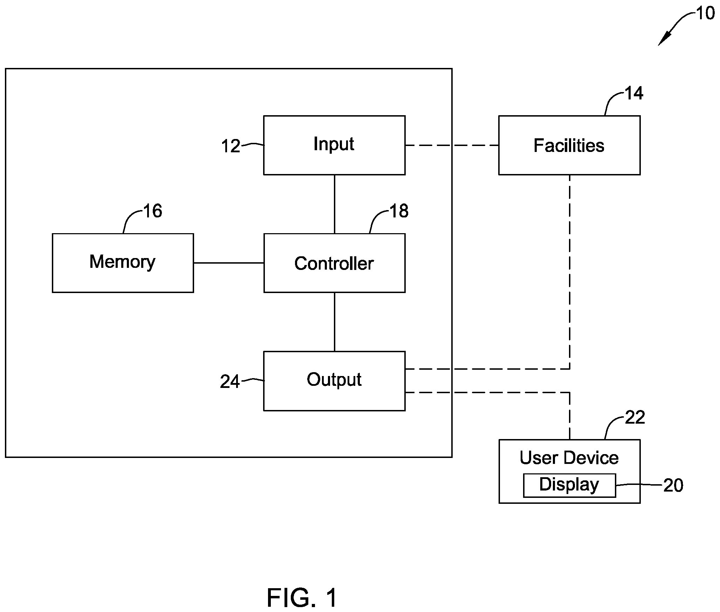

Figure 1 is a schematic block diagram of an illustrative system 10 for monitoring and controlling carbon emission, energy usage and/or utility costs at one or more facilities, wherein each facility includes one or more devices that use a commodity or service provided by a utility. The illustrative system 10 includes an input 12 for receiving information regarding use of a commodity or service provided by each of one or more utilities at one or more facilities 14. The system 10 includes a memory 16 for storing the received information including historical information. A controller 18 is operably coupled to the input 12 and to the memory 16, and is configured to render a dashboard for display on a display such as a display 20 forming a part of a user device 22. The user device 22 may be a computer, for example. The controller 18 is also operably coupled to an output 24 that allows the controller 18 to send the dashboard to the display 20. The output 24 also allows the controller 18 to pass commands to the user device 22 and/or to the facilities 14.

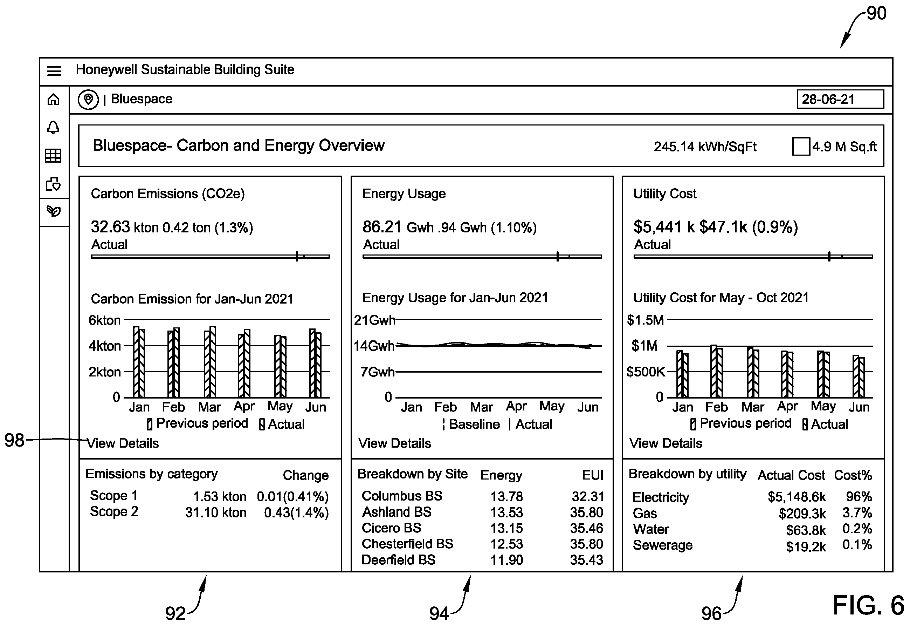

In some cases, the dashboard concurrently displays a carbon emission card, an energy usage card and a utility cost card (see, for example, Figure 6). The carbon emission card displays a carbon emission rolled up over a current time period relative to the carbon emission rolled up over a previous time period, wherein the carbon emission rolled up over the current time period and the carbon emission rolled up over the previous time period are determined based at least in part on the information stored in the memory 16.

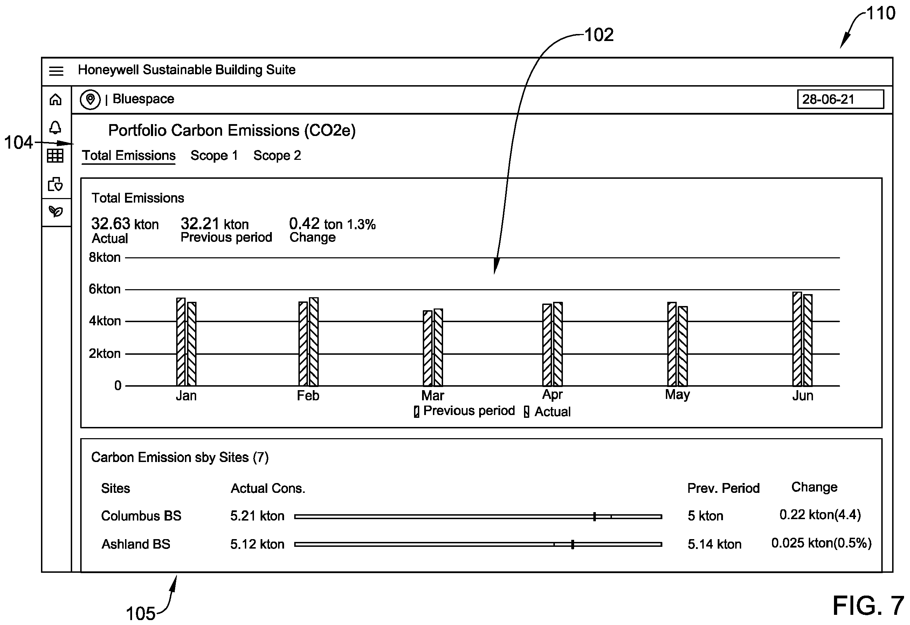

In some cases, the carbon emission card may display a trend of carbon emission over time. The carbon emission card may display carbon emission in each of two or more carbon emission categories, wherein the two or more carbon emission categories include direct carbon emission and indirect carbon emission. Direct carbon emissions are carbon emissions directly produced at or by the facility, such as burning of natural gas to heat the facility or to support an industrial process or the like. Indirect carbon emissions are carbon emissions that are produced elsewhere such as at a utility or the like to produce the commodity or service that is consumed by the facility, such as the burning of natural gas or coal at an electric utility to produce the electricity that is consumed by the facility. In some cases, the carbon emission card includes one or more user selectable elements that when selected by a user cause the dashboard to display a carbon emission sub-card (see, for example, Figure 7) that displays a breakdown of carbon emission from each of a plurality of carbon emission sources. The carbon emission sub-card may include a sort feature that when selected by the user sorts the breakdown of carbon emission from each of the plurality of carbon emission sources according to a selected sort criteria. The carbon emission sub-card may display carbon emission over the current time period relative to carbon emission over the previous time period for each of the plurality of carbon emission sources, for example.

The energy usage card, when provided, displays an energy usage rolled up over the current time period relative to the energy usage rolled up over the previous time period, wherein the energy usage rolled up over the current time period and the energy usage rolled up over the previous time period are determined based at least in part on the information stored in the memory 16. The utility cost card, when provided, displays a utility cost rolled up over the current time period relative to the utility cost rolled up over a previous time period, wherein the utility cost rolled up over the current time period and the utility costs rolled up over the previous time period are determined based at least in part on the information stored in the memory 16.

In some cases, the energy usage card may display a trend of energy usage over time. The energy usage card may include one or more user selectable elements that when selected cause the dashboard to display an energy usage sub-card that displays a breakdown of energy usage from each of a plurality of energy usage sources, such as natural gas and electricity. In some cases, the energy usage sub-card includes a sort feature that when selected sorts the breakdown of energy usage from each of the plurality of energy usage sources according to a selected sort criteria. The energy usage sub-card may display energy usage over the current time period relative to energy usage over the previous time period for each of the plurality of energy usage sources.

The controller 18 is configured to receive an input from a user to control one or more of the devices to reduce carbon emission, energy usage and/or utility costs at one or more of the facilities 14 and to send control commands to control the one or more devices based on the received user input. In some cases, the carbon emission card rolls up carbon emission across a selected one of the one or more facilities, the energy usage card rolls up energy usage across the selected one of the one or more facilities, and the utility cost card rolls up the utility cost across the selected one of the one or more facilities. In some cases, the one or more facilities include two or more facilities arranged in a portfolio of facilities, wherein the carbon emission card rolls up carbon emission across the portfolio of facilities, the energy usage card rolls up energy usage across the portfolio of facilities, and the utility cost card rolls up the utility cost across the portfolio of facilities.

In some cases, the dashboard may include an overview view that, when selected by a user, displays a map with an indicator at each location that corresponds to one of the two or more facilities in the portfolio of facilities. Each indicator may be marked when the carbon emission over the current time period exceeds the carbon emission over the previous time period for the corresponding facility by at least a carbon emission threshold. Each indicator may be marked when the energy usage over the current time period exceeds the energy usage over the previous time period for the corresponding facility by at least an energy usage threshold. Each indicator may be marked when the utility cost over the current time period exceeds the utility cost over the previous time period for the corresponding facility by at least a utility cost threshold.

In some cases, the controller 18 may receive environmental information regarding one or more environmental conditions in or around each of the one or more of the facilities 14 via input 12. The controller may apply a non-linear model to the environmental information along with the received carbon emission, energy usage and/or utility costs, to determining a baseline for carbon emission, energy usage and/or utility costs for the current time period. For example, if the outside temperature and humidity at a facility are hotter over the current time period (e.g. May 2022) relative to the previous time period (e.g. May 2021), then the non-linear model may determine an increased baseline for carbon emission, utility usage, and utility cost for the current time period relative to the previous time period in order to provide additional cooling for the facility relative to the previous time period. In some cases, the non-linear model may be implemented and/or refined using Artificial Intelligence.

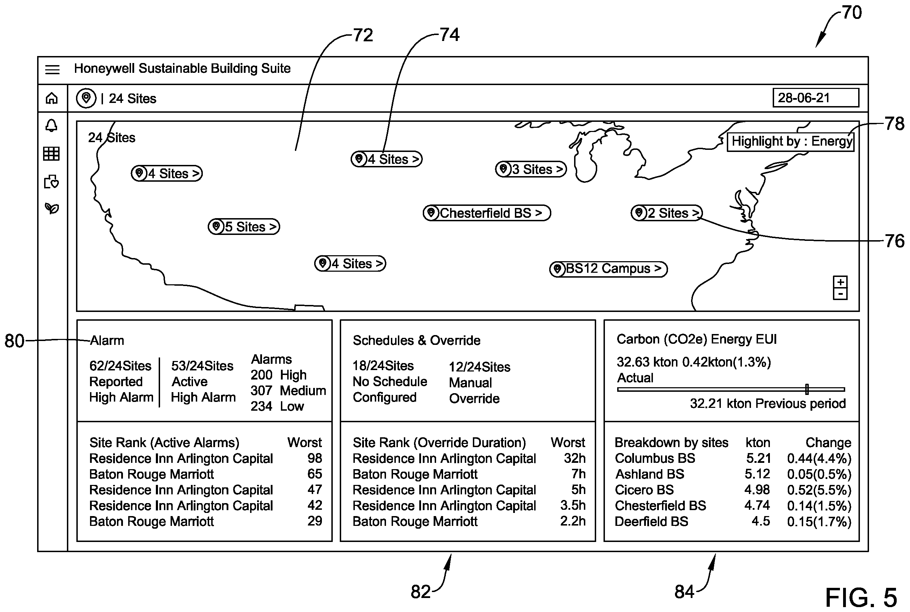

As shown in Figure 5, the dashboard may include an overview view that, when selected by a user, displays a map with an indicator at each location that corresponds to one of the two or more facilities in the portfolio of facilities. Each indicator may be marked when a baseline carbon emission over the current time period exceeds the baseline carbon emission over the previous time period for the corresponding facility by at least a carbon emission threshold. Each indicator may be marked when the baseline energy usage over the current time period exceeds the baseline energy usage over the previous time period for the corresponding facility by at least an energy usage threshold. Each indicator may be marked when the baseline utility cost over the current time period exceeds the baseline utility cost over the previous time period for the corresponding facility by at least a utility cost threshold. The baseline utility cost may depend on the current cost of the commodity or service provided by the utility. It is contemplated that the non-linear model may utilize the utility costs when determining the baseline utility cost for the current time period and the baseline utility cost for the previous time period. By comparing the baseline values, rather than absolute values, fewer false positives indications may be provided to the user.

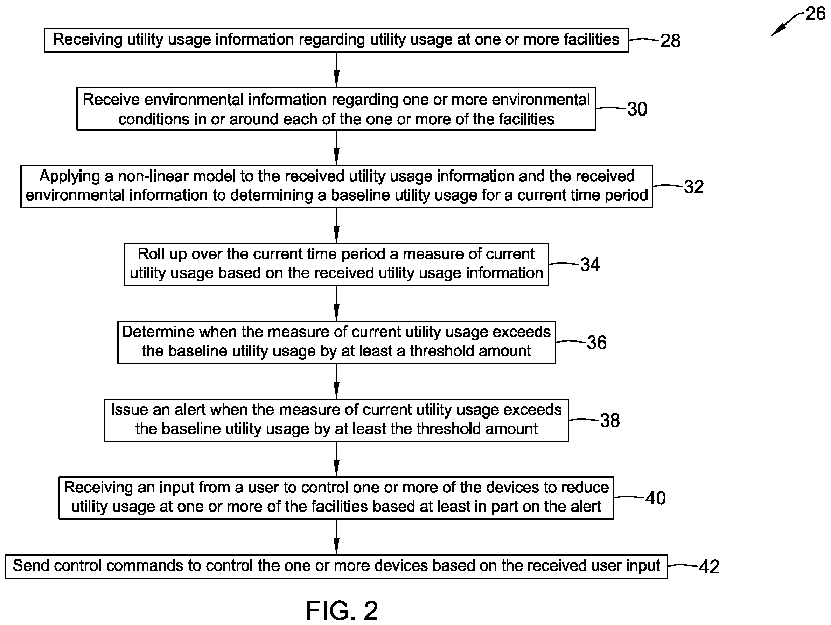

Figure 2 is a flow diagram showing an illustrative method 26 for monitoring and controlling utility usage at one or more facilities (such as the facilities 14), wherein each facility includes one or more devices that use a commodity or service provided by a utility. The illustrative method 26 includes receiving utility usage information regarding utility usage at one or more facilities, as indicated at block 28. Environmental information regarding one or more environmental conditions in or around each of the one or more of the facilities is received, as indicated at block 30. A non-linear model is applied to the received utility usage information and the received environmental information to determining a baseline utility usage for a current time period, as indicated at block 32. A measure of current utility usage based on the received utility usage information is rolled up over the current time period, as indicated at block 34. In some cases, the measure of current utility usage may include one or more of carbon emission, energy usage and energy cost. A determination is made as to when the measure of current utility usage exceeds the determined baseline utility usage by at least a threshold amount, as indicated at block 36. An alert is issued when the measure of current utility usage exceeds the baseline utility usage by at least the threshold amount, as indicated at block 38. In some cases, the threshold amount may be user-selectable.

In some cases, the method 26 may further include receiving an input from a user to control one or more of the devices to reduce utility usage at one or more of the facilities based at least in part on the alert, as indicated at block 40. For example, the user may turn off a non-critical load in the facility for a period of time. The method 26 may include sending control commands to control the one or more devices based on the received user input, as indicated at block 42.

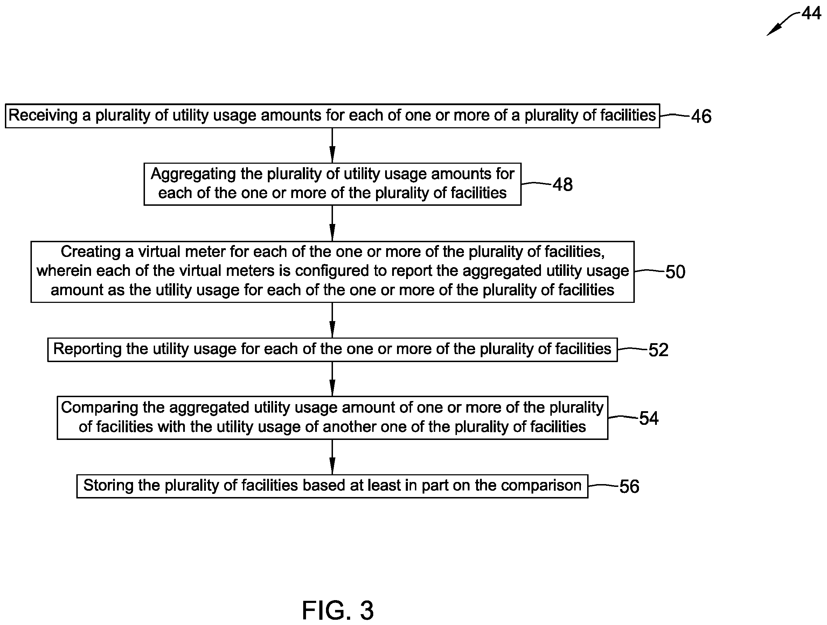

Figure 3 is a flow diagram showing an illustrative method 44 for determining utility usage at one or more facilities (such as the facilities 14). The method 44 includes receiving a plurality of utility usage amounts for each of one or more of a plurality of facilities, as indicated at block 46. The plurality of utility usage amounts for each of the one or more of the plurality of facilities are aggregated for the corresponding facility, as indicated at block 48. A virtual meter is created for each of the one or more of the plurality of facilities, wherein each of the virtual meters is configured to report the aggregated utility usage amount as the utility usage for each of the corresponding facility, as indicated at block 50. The utility usage is reported for each of the one or more of the plurality of facilities, as indicated at block 52.

In some cases, the method 44 may further include comparing the aggregated utility usage amount of one or more of the plurality of facilities with the utility usage of another one of the plurality of facilities, as indicated at block 54. The method 44 may include storing a ranking of the plurality of facilities based at least in part on the comparison, as indicated at block 56.

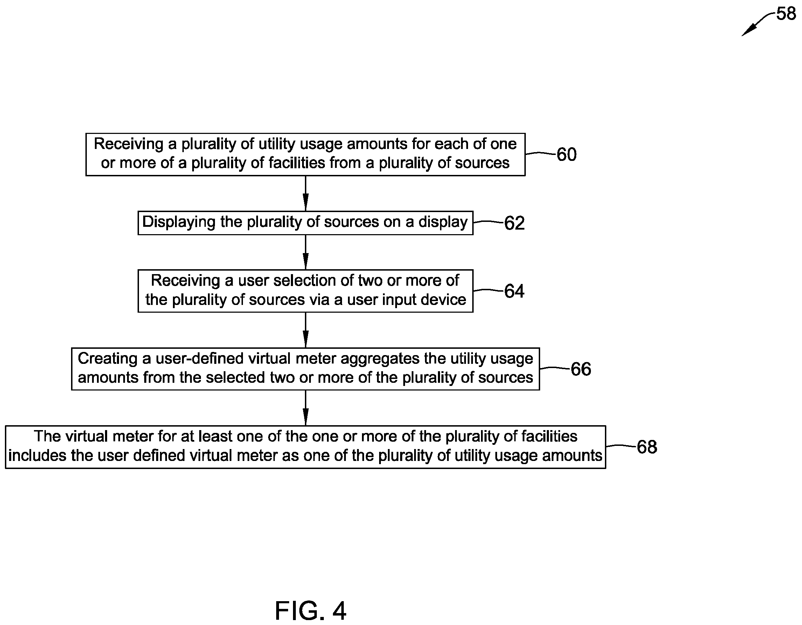

Figure 4 is a flow diagram showing an illustrative method 58 for determining utility usage at one or more facilities (such as the facilities 14). The illustrative method 58 includes receiving a plurality of utility usage amounts for each of one or more of a plurality of facilities from a plurality of sources, as indicated at block 60. The plurality of sources are displayed on a display (such as the display 20 of the user device 22), as indicated at block 62. A user selection of two or more of the plurality of sources is received via a user input device, as indicated at block 64. A user-defined virtual meter is created that aggregates the utility usage amounts from the selected two or more of the plurality of sources, as indicated at block 66. The virtual meter for at least one of the one or more of the plurality of facilities includes a user defined virtual meter as one of the plurality of utility usage amounts, as indicated at block 68. The virtual meters may be nested.

Figures 5 through 21 are screen captures showing illustrative screens that may be displayed as part of the dashboard generated and displayed by the system 10. Figure 5 shows a screen 70 that may be generated and displayed by the system 10. The screen 70 provides a portfolio-wide view of the facilities that are part of an entity's portfolio of facilities. The screen 70 includes a map 72 that shows a number of sites on the map. In this particular example, there are a total of 24 sites, with most of the sites performing well and just several sites that are not performing as well. The map 72 includes an icon 74 and an icon 76 that are each colored red, or otherwise indicated as showing that the icons 74 and 76 represent sites or collections of sites that are not performing as well as other sites. A pull-down menu 78 may be used to toggle between highlighting site performance by energy, by carbon emissions or by utility costs. As shown, the pull-down menu 78 indicates that a selection was made to highlight by energy.

The screen 70 may be customized to include a variety of different sections, or cards. As shown, the screen 70 includes an alarms card 80 that includes a summary of how many active alarms there currently are across the portfolio, including a breakdown of how many high priority alarms, medium priority alarms and low priority alarms. The alarms card 80 also includes a listing of the sites (e.g. facilities) with active alarms. The screen 70 includes a schedules and override card 82 that shows at a glance how many sites are either running without a schedule, or are on a manual override. The screen 70 also includes a Carbon/Energy/Energy Usage Intensity (EUI) card 84 that provides a graphical representation of carbon, energy and EUI usage, and can be toggled between displaying carbon, energy and EUI usage

Figure 6 shows a screen 90 that may be generated and displayed by the system 10. The screen 90 provides a carbon and energy overview for a particular site. The screen 90 includes a carbon emissions card 92, an energy usage card 94 and a utility cost card 96. The carbon emissions card 92 includes a graphical representation of current carbon emissions, as well as a graph showing carbon emissions for past months. The energy usage card 94 includes a graphical representation of current energy usage as well as a graph showing energy usage for past months. The utility cost card 96 includes a graphical representation of current utility cost as well as a graph showing utility cost for past months.

The carbon emissions card 92 includes a breakdown by Scope 1 and Scope 2 for carbon emissions, corresponding to direct carbon emissions (Scope 1) and indirect carbon emissions (Scope 2). The energy usage card 94 includes a breakdown by site (e.g. facility) while the utility cost card 96 includes a breakdown by utility type (electricity, gas, water, sewer and so on).

A VIEW DETAILS button 98 may be selected in order to have the system 10 display additional information, or alternatively have the system 10 display the carbon emissions card 92 in a larger size, that is easier to read. Figure 7 shows a screen 100 that may be generated and displayed by the system 10, and may represent a sub-card of the carbon emissions card 92. The illustrative screen 100 includes a graphical representation 102 that compares, for each time period (e.g. each month), actual carbon emissions versus the carbon emissions for a corresponding previous period (such as but not limited to the same month, but the previous year). The illustrative screen 100 includes a menu bar 104 that may be used to toggle between Total Emissions, Scope 1 (e.g. direct) emissions or Scope 2 (e.g. indirect) emissions. As shown, the Total Emissions are toggled, and thus the displayed data shows total emissions, which is a summation of Scope 1 and Scope 2 emissions. The screen 100 includes a site-specific list 105 that can be scrolled through to see additional information for individual sites (facilities) of the portfolio of sites.

A sub-card for the energy usage card 94 may be displayed when the VIEW DETAILS button of the energy usage card 94 is selected, which may display additional information related to energy usage such as energy usage broken out by energy type (e.g. gas, electricity). Likewise, a sub-card for the utility cost card 96 may be displayed when the VIEW DETAILS button of the utility cost card 96 is selected, which may display additional information related to the utility cost such as utility costs broken out by utility type (e.g. gas, electricity, water, sewer, etc.).

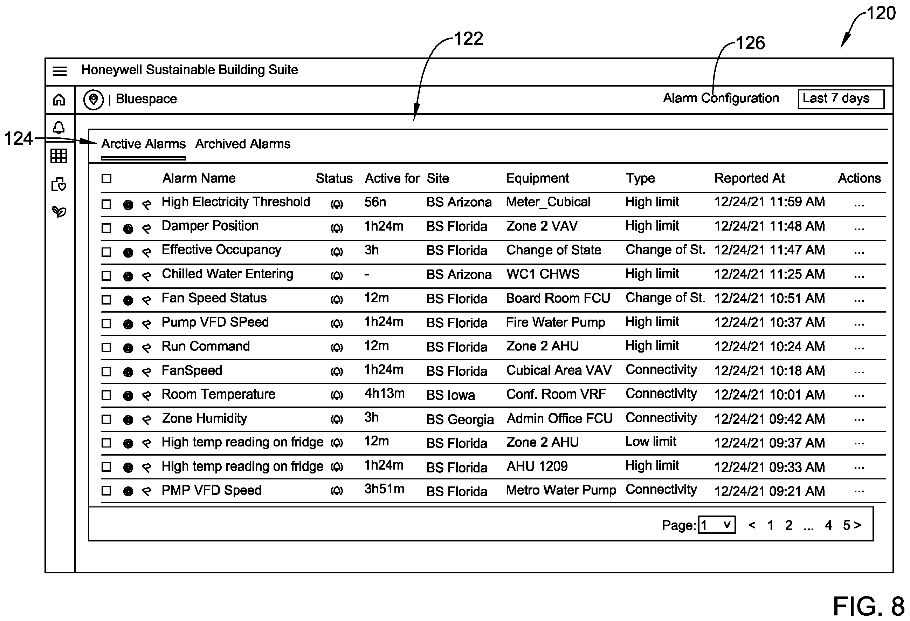

Figure 8 shows a screen 120 that may be generated and displayed by the system 10. The screen 120 includes a listing 122 of alarms. The illustrative screen 120 includes a menu bar 124 that allows a user to toggle between Active Alarms and Archived Alarms. As shown, Active Alarms has been selected. The listing 122 of alarms can include a number of columns providing additional information, such as but not limited to one or more of Alarm Name, Status, Active Duration, Site Name, Equipment Name, Alarm Type and When Reported. If desired, a user may be able to drill down further and obtain more information by clicking on a particular alarm name, or site, or equipment, among others. The screen 120 includes an Alarm Configuration button 126 that may be selected in order to configure alarms.

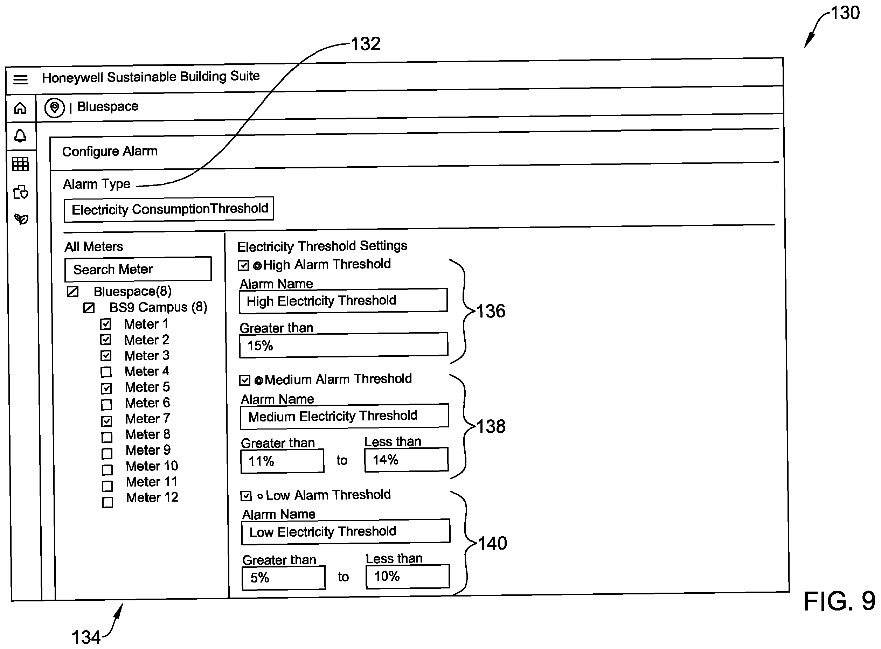

Figure 9 shows a screen 130 that may be generated and displayed by the system 10 as a result of a user having selected the Alarm Configuration button 126 shown in Figure 8. The screen 130 includes an alarm type pull-down menu 132 that allows selection of a particular type of alarm to be configured. As shown, electricity consumption threshold has been selected. The screen 130 includes a listing 134 of meters, showing that some of the meters have been selected. The screen 130 includes a high alarm threshold section 136 that shows the name of the alarm and its triggering value, a medium alarm threshold section 138 that shows the name of the alarm and a range for its triggering value, and a low alarm threshold section 140 that shows the name of the alarm and a range for its triggering value. In the example shown, when the current electricity usage during a current time period exceeds the electricity usage during a relevant previous period time period (or exceeds a baseline electricity usage that is calculated based on the electricity usage during a relevant previous period time and one or more environmental conditions) by 5%-10%, the "Low Electricity Threshold" alarm is raised. When the current electricity usage during a current time period exceeds the electricity usage during a relevant previous period time period (or exceeds a baseline electricity usage that is calculated based on the electricity usage during a relevant previous period time and one or more environmental conditions) by 11%-15%, the "Medium Electricity Threshold" alarm is raised. When the current electricity usage during a current time period exceeds the electricity usage during a relevant previous period time period (or exceeds a baseline electricity usage that is calculated based on the electricity usage during a relevant previous period time and one or more environmental conditions) by greater than 15%, the "High Electricity Threshold" alarm is raised. Each of these sections 136, 138 and 140 may be user-selectable and user-editable. These threshold settings are applied to the selected meters in the listing 134 of meters.

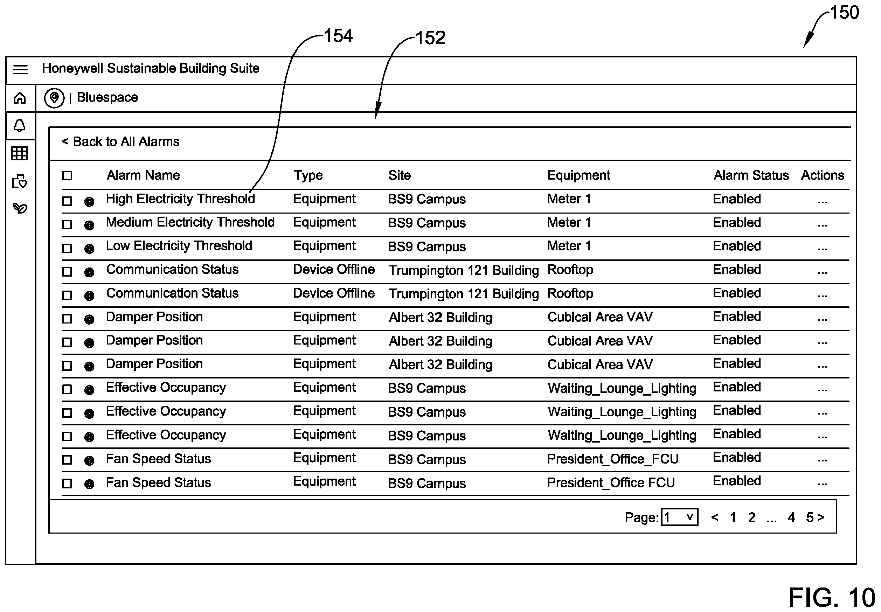

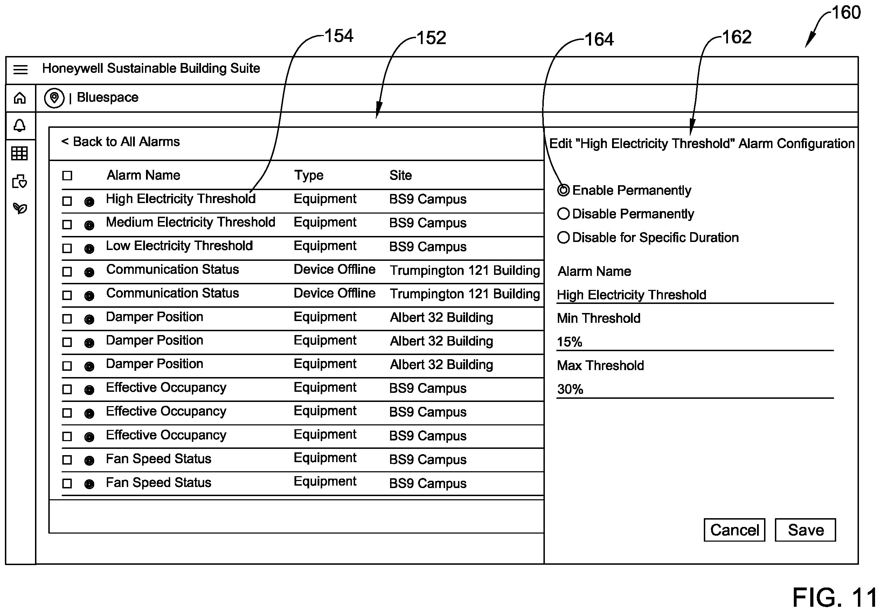

Figure 10 shows a screen 150 that may be generated and displayed by the system 10. The screen 150 includes a listing 152 showing the alarms that have been successfully configured. Figure 11 shows a screen 160 that is similar to the screen 150, but includes a pop-up 162 that is displayed as a result of a user selecting the high electricity threshold alarm 154 shown in the listing 152. The pop-up 162 allows a user to make choices, such as permanently enabling the alarm configuration, permanently disabling the alarm configuration and disabling the alarm configuration for a given duration. As shown, the user has selected to enable the alarm configuration permanently, as indicated by the filled-in radio button 164.

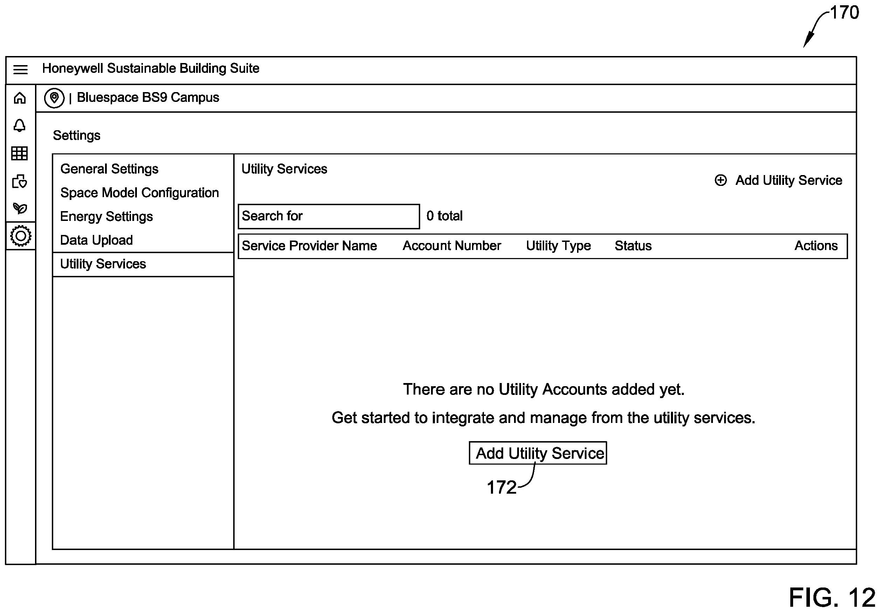

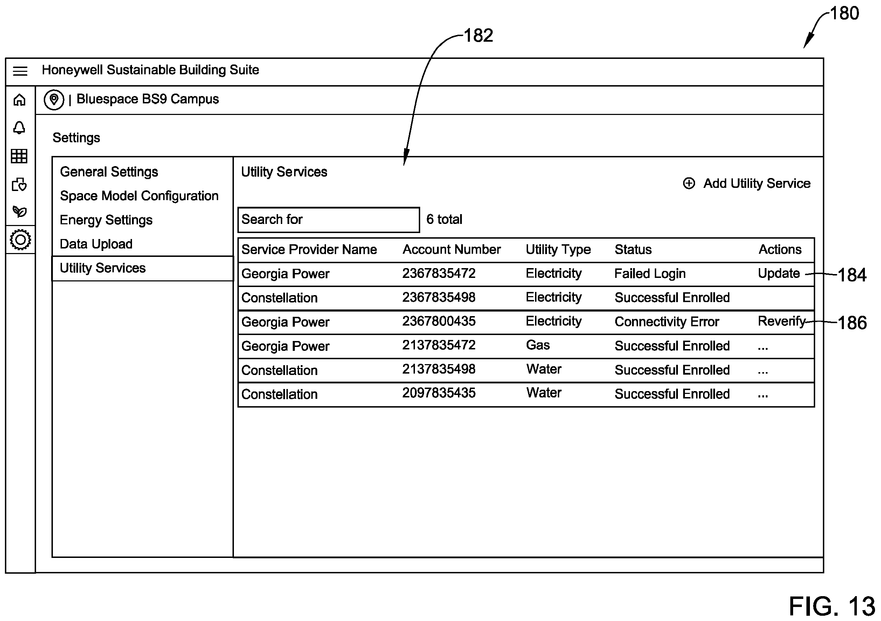

Figure 12 shows a screen 170 that allows a user to inform the system 10 of utility services that a particular facility or group of facilities may be using, as these utility services contribute to the utility costs for the particular facility or group of facilities. An Add Utility Service button 172 may be selected to initiate a process for adding utility service information to the system 10. Selecting the Add Utility Service button 172 will allow a user to add utility services. In some cases, the user may enter their account information for their electricity provider, or perhaps their gas provider, or their water provider. Once the system 10 has been successfully coupled with the utility providers, the system 10 may generate and display a screen 180, as shown in Figure 13.

The screen 180 of Figure 13 includes a listing 182 of the utility services that have been added. As can be seen, there was a failed login for one utility account and a connectivity error for another utility account. The screen 180 includes an Update button 184 that may be used if the user wishes to try again to log in for that utility, as it appears they had an error in either their username or their password. The screen 180 includes a Reverify button 186 that may be used if the user wishes to try again to connect to the corresponding utility.

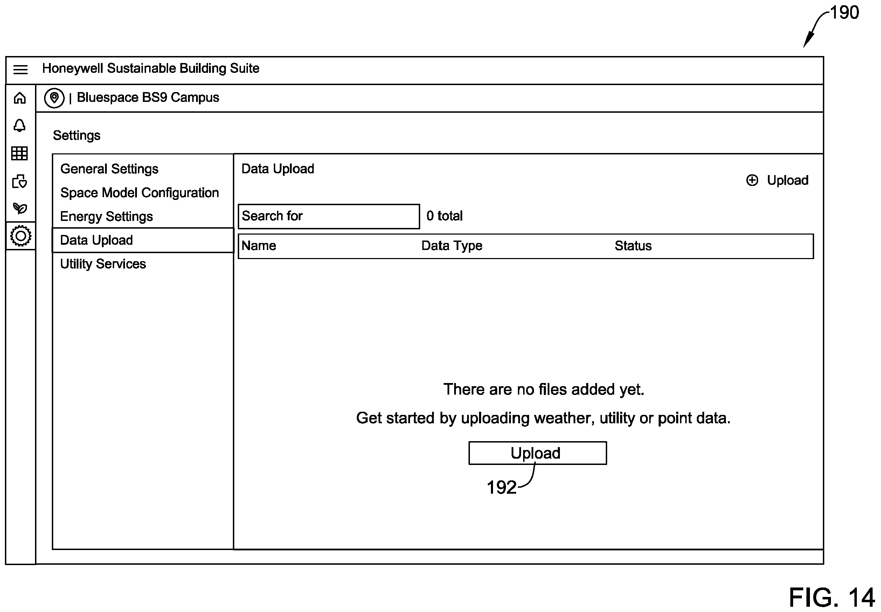

In some cases, connecting the system 10 to the utility providers can provide the system 10 with both historical utility data and current utility data going forward. In some cases, connecting the system 10 to the utility providers may not provide the system 10 with historical utility data (and in some cases current utility data). In situations such as these, it may be helpful to be able to manually upload historical and/or current utility data. Figure 14 shows a screen 190 that may be generated and displayed by the system 10. The screen 190 includes an Upload button 192 that may be used to upload files that include historical utility data.

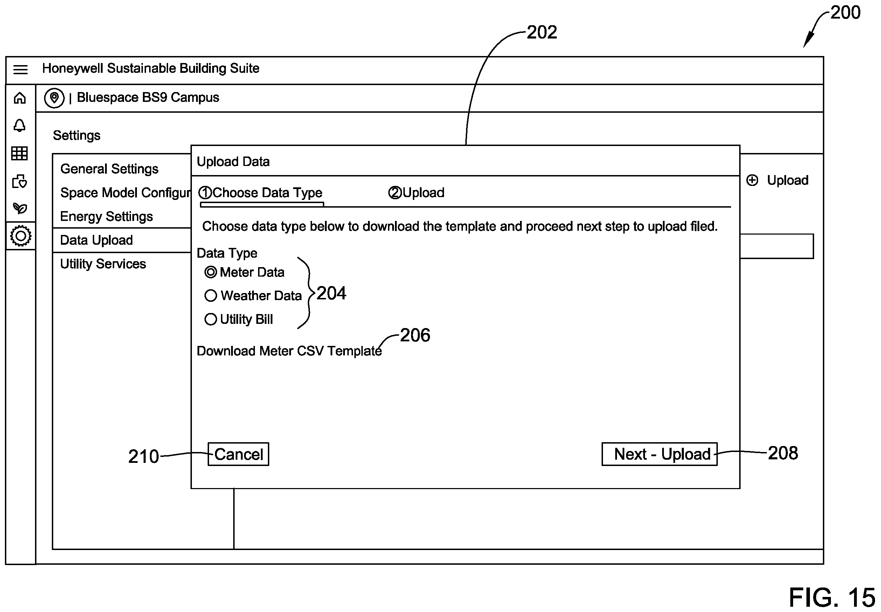

Figure 15 shows a screen 200 that may be generated and displayed by the system 10. The screen 200 is similar to the screen 190 shown in Figure 14, but includes a pop-up box 202 that allows the user to make particular selections regarding the data to be uploaded. For example, the pop-up box 202 includes several radio buttons 204 that may be used to select the type of data to be uploaded. As shown, the user has selected to upload meter data. The pop-up box 202 includes a template button 206 that may be selected if the user needs to download the appropriate template for the data to be uploaded. The pop-up box 202 includes a Next button 208 in order to continue with the upload and a Cancel button 210 in order to cancel the upload.

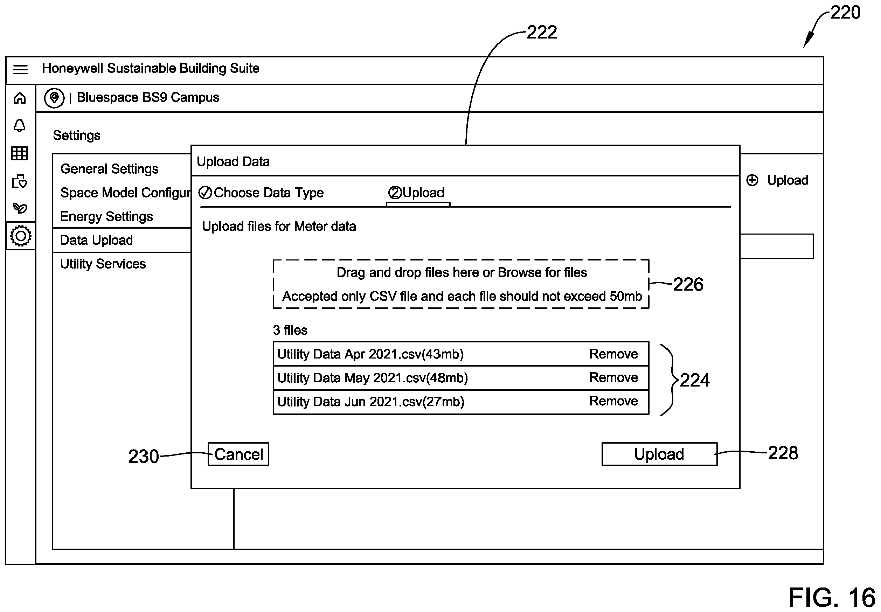

Figure 16 shows a screen 220 that may be generated and displayed by the system 10. The screen 220 is similar to the screen 190 shown in Figure 14, but includes a pop-up box 222. The pop-up box 222 includes a listing 224 of the files that have been attached in preparation of uploading the files. A drag and drop box 226 provides a way for a user to attach additional files, if desired. An Upload button 228 may be used to upload the attached and listed files, or a Cancel button 230 may be used to cancel the upload.

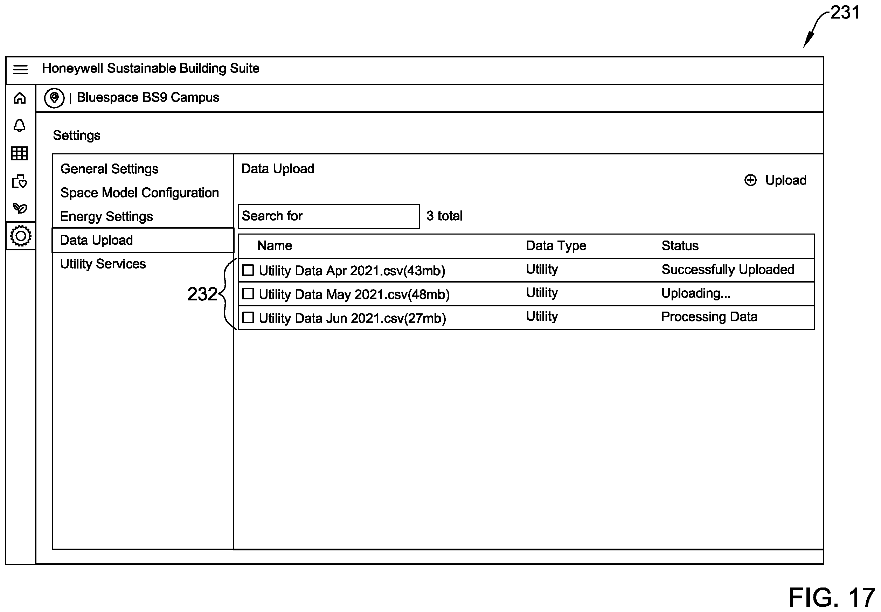

Figure 17 shows a screen 231 that may be generated and displayed by the system 10. The screen 231 includes a listing 232 of the files that are being uploaded, and the current status of the upload. As shown, the first file has been successfully uploaded, the second file is in the process of being uploaded, and the third file is undergoing data processing. This may be an indication that the third file was successfully uploaded, and has moved on to subsequent processing.

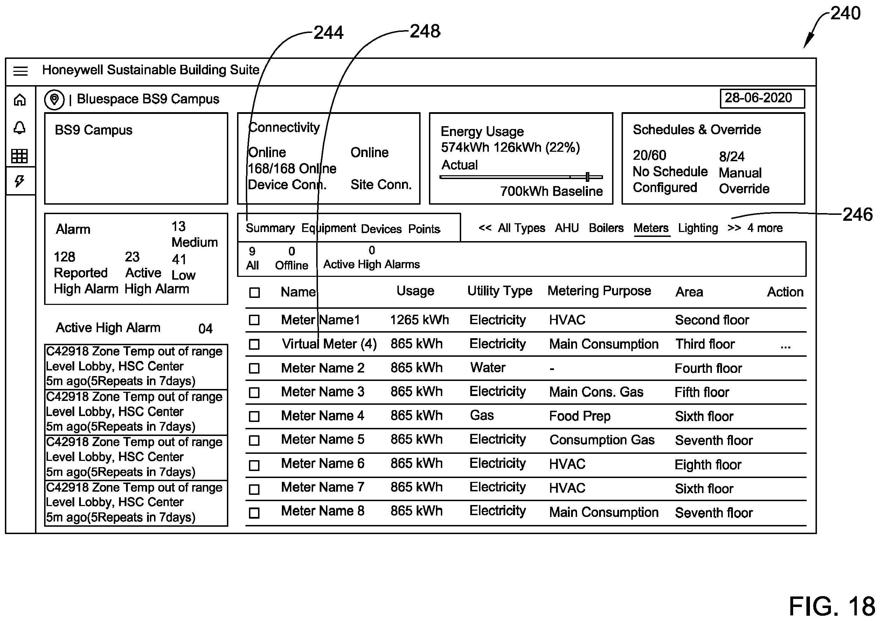

Figure 18 shows a screen 240 that may be generated and displayed by the system 10. The screen 240 includes a listing 242 that shows a number of meters. The screen 240 includes a menu bar 244 that allows a user to select between summary, equipment, devices and points. As shown, equipment has been selected. The screen 240 also includes a menu bar 246 that allows a user to select between all types, AHU, boilers, meters, lighting and others. As shown, meters has been selected. It can be seen that the listing 242 of meters includes a virtual meter 248.

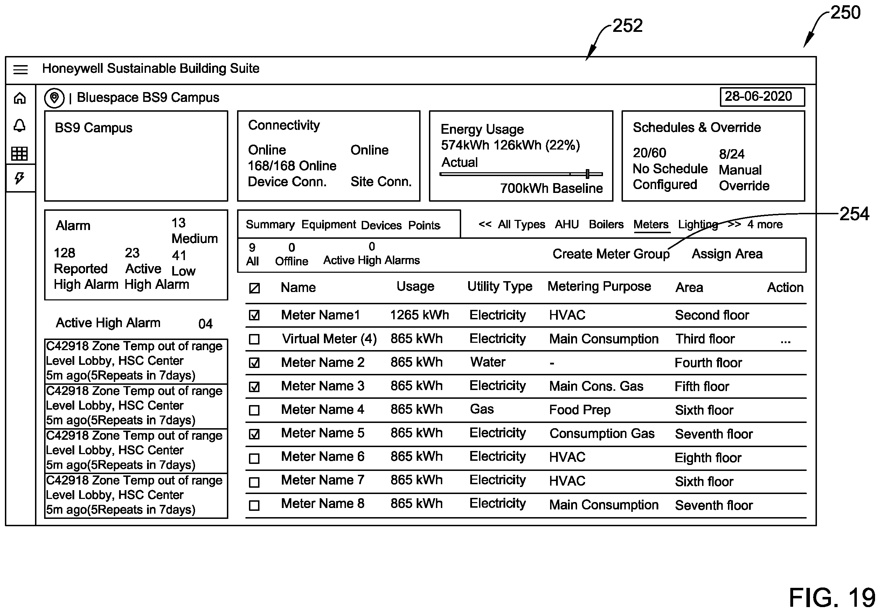

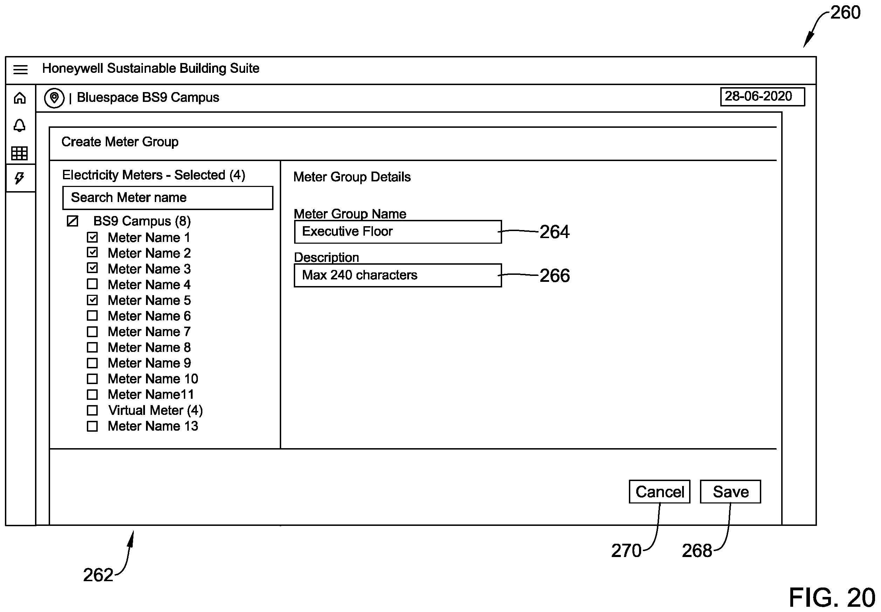

Figure 19 shows a screen 250 that may be generated and displayed by the system 10. The screen 250 is similar to the screen 240, but as can be seen in a listing 252 of meters, several meters have been selected. As a result, the screen 250 includes a Create Meter Group button 254. Selecting the Create Meter Group button 254 may cause the system 10 to generate and display a screen 260, as shown in Figure 20. The screen 260 includes a listing 262 of meters that are being aggregated to form a new virtual meter. The screen 260 includes a naming box 264 and a description box 266. In this example, the meter group has been named "Executive Floor" by the user. The screen 260 includes a SAVE button 268 that can be used to save the newly created virtual meter, and a Cancel button 270 that may be used to eliminate the newly created virtual meter.

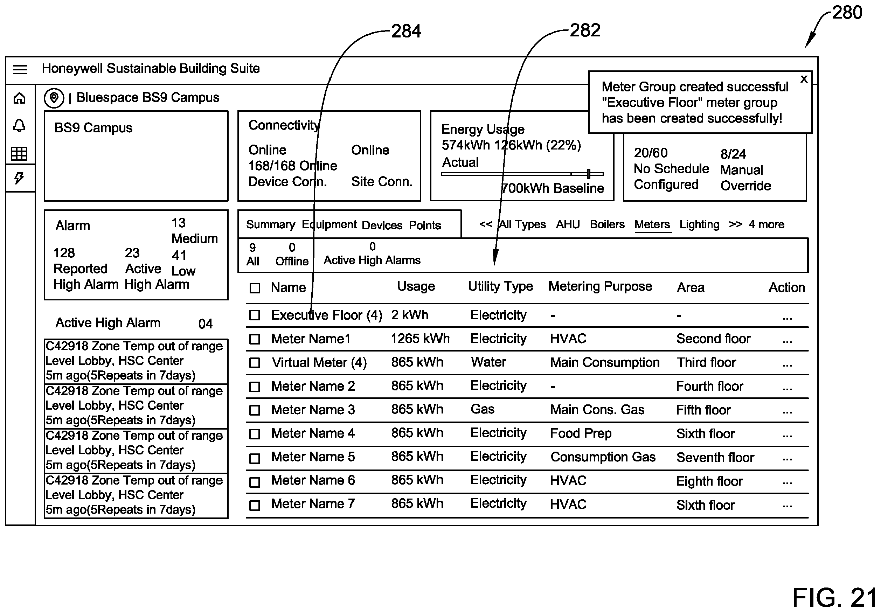

Figure 21 shows a screen 280 that may be generated and displayed by the system 10 in response to the user selecting the Save button 268 as shown in Figure 20. The screen 280 includes a listing 282 of meters. It can be seen that the listing 282 of meters now includes the "Executive Floor(4)" virtual meter 284. The virtual meter 284 is an aggregation of the four electricity meters selected in Figure 20.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A system for monitoring and controlling carbon emission, energy usage and utility costs at one or more facilities, wherein each facility includes one or more devices that use a commodity or service provided by a utility, the system comprising:
an input for receiving information regarding use of a commodity or service provided by each of one or more utilities at one or more facilities;
a memory for storing the received information including historical information;
a controller operatively coupled to the input and the memory, the controller configured to render a dashboard for display on a display, wherein the dashboard concurrently displays:
a carbon emission card that displays a carbon emission rolled up over a current time period relative to the carbon emission rolled up over a previous time period, wherein the carbon emission rolled up over the current time period and the carbon emission rolled up over the previous time period are determined based at least in part on the information stored in the memory;
an energy usage card that displays an energy usage rolled up over the current time period relative to the energy usage rolled up over the previous time period, wherein the energy usage rolled up over the current time period and the energy usage rolled up over the previous time period are determined based at least in part on the information stored in the memory;
a utility cost card that displays a utility cost rolled up over the current time period relative to the utility cost rolled up over a previous time period, wherein the utility cost rolled up over the current time period and the utility costs rolled up over the previous time period are determined based at least in part on the information stored in the memory;
receive an input from a user to control one or more of the devices to reduce carbon emission, energy usage and/or utility costs at one or more of the facilities; and
send control commands to control the one or more devices based on the received user input.

2. The system of claim 1, wherein the carbon emission card displays a trend of carbon emission over time.

3. The system of claim 1, wherein the carbon emission card displays carbon emission in each of two or more carbon emission categories, wherein the two or more carbon emission categories include direct carbon emission and indirect carbon emission.

4. The system of claim 1, wherein the carbon emission card includes one or more user selectable elements that when selected by a user cause the dashboard to display a carbon emission sub-card that displays a breakdown of carbon emission from each of a plurality of carbon emission sources.

5. The system of claim 4, wherein the carbon emission sub-card includes a sort feature that when selected by the user sorts the breakdown of carbon emission from each of the plurality of carbon emission sources according to a selected sort criteria.

6. The system of claim 4, wherein for each of the plurality of carbon emission sources, the carbon emission sub-card displays carbon emission over the current time period relative to carbon emission over the previous time period.

7. The system of claim 1, wherein the energy usage card displays a trend of energy usage over time.

8. The system of claim 1, wherein the energy usage card includes one or more user selectable elements that when selected cause the dashboard to display an energy usage sub-card that displays a breakdown of energy usage from each of a plurality of energy usage sources.

9. The system of claim 8, wherein the energy usage sub-card includes a sort feature that when selected sorts the breakdown of energy usage from each of the plurality of energy usage sources according to a selected sort criteria.

10. The system of claim 8, wherein for each of the plurality of energy usage sources, the energy usage sub-card displays energy usage over the current time period relative to energy usage over the previous time period.

11. The system of claim 1, wherein the carbon emission card rolls up carbon emission across a selected one of the one or more facilities, the energy usage card rolls up energy usage across the selected one of the one or more facilities, and the utility cost card rolls up the utility cost across the selected one of the one or more facilities.

12. The system of claim 1, wherein the one or more facilities include two or more facilities arranged in a portfolio of facilities, wherein the carbon emission card rolls up carbon emission across the portfolio of facilities, the energy usage card rolls up energy usage across the portfolio of facilities, and the utility cost card rolls up the utility cost across the portfolio of facilities.

13. The system of claim 12, wherein the dashboard includes an overview view that, when selected by a user, displays a map with an indicator at each location that corresponds to one of the two or more facilities in the portfolio of facilities, wherein each indicator is marked when one or more of:
the carbon emission over the current time period exceeds the carbon emission over the previous time period for the corresponding facility by at least a carbon emission threshold;
the energy usage over the current time period exceeds the energy usage over the previous time period for the corresponding facility by at least an energy usage threshold; and
the utility cost over the current time period exceeds the utility cost over the previous time period for the corresponding facility by at least a utility cost threshold.

14. A method for monitoring and controlling utility usage at one or more facilities, wherein each facility includes one or more devices that use a commodity or service provided by a utility, the method comprising:
receiving utility usage information regarding utility usage at one or more facilities;
receive environmental information regarding one or more environmental conditions in or around each of the one or more of the facilities;
applying a non-linear model to the received utility usage information and the received environmental information to determining a baseline utility usage for a current time period;
roll up over the current time period a measure of current utility usage based on the received utility usage information;
determine when the measure of current utility usage exceeds the baseline utility usage by at least a threshold amount; and
issue an alert when the measure of current utility usage exceeds the baseline utility usage by at least the threshold amount.

15. The method of claim 14, further comprising:
receiving an input from a user to control one or more of the devices to reduce utility usage at one or more of the facilities based at least in part on the alert; and
send control commands to control the one or more devices based on the received user input.
